# EUROPÄISCHE PATENTSCHRIFT

(11) **EP 3 934 966 B1**
(45) Veröffentlichungstag und Bekanntmachung des Hinweises auf die Patenterteilung: **16.07.2025**
(21) Anmeldenummer: 20703150.1
(22) Anmeldetag: 21.01.2020
(51) Int. Cl.: B62D 3/12, B62D 21/11

(54) **RAHMENEINRICHTUNG FÜR EIN FAHRZEUG, INSBESONDERE FÜR EIN KRAFTFAHRZEUG, SOWIE FAHRZEUG MIT WENIGSTENS EINER SOLCHEN RAHMENEINRICHTUNG**
FRAME DEVICE FOR A VEHICLE, IN PARTICULAR FOR A MOTOR VEHICLE, AND VEHICLE HAVING AT LEAST ONE SUCH FRAME DEVICE
DISPOSITIF DE CHÂSSIS POUR UN VÉHICULE, NOTAMMENT POUR UN VÉHICULE AUTOMOBILE, AINSI QUE VÉHICULE COMPRENANT AU MOINS UN TEL DISPOSITIF DE CHÂSSIS

(30) Priorität: 07.03.2019 DE 102019203104
(43) Veröffentlichungstag der Anmeldung: 12.01.2022
(73) Patentinhaber: Audi AG, 85045 Ingolstadt (DE)
(72) Erfinder: SCHANTL, Gilbert, 80802 München (DE); GOLDBERG, Ruben, 85049 Ingolstadt (DE); KLINGER, Thomas, 85055 Ingolstadt (DE); BUJAK, Marek, 91809 Wellheim (DE); FRENSCH, Hans-Peter, 85055 Ingolstadt (DE); DOBEL, Martin, 85051 Ingolstadt (DE); MANSKE, Eike Malte, 85051 Ingolstadt (DE)
(86) Internationale Anmeldenummer: PCT/EP2020/051432
(87) Internationale Veröffentlichungsnummer: WO 2020/177942

(56) Entgegenhaltungen:
- EP-A1- 1 731 409
- EP-B1- 1 731 409
- DE-A1- 10 229 161
- DE-A1- 102011 010 114
- DE-T2- 3 871 923
- JP-A- 2011 240 787
- US-A1- 2006 082 121
- US-A1- 2011 062 677
- US-A1- 2016 257 335

## Beschreibung

Die Erfindung betrifft eine Rahmeneinrichtung für ein Fahrzeug, insbesondere für ein Kraftfahrzeug, gemäß dem Oberbegriff von Patentanspruch 1. Des Weiteren betrifft die Erfindung ein Fahrzeug, insbesondere ein Kraftfahrzeug, mit wenigstens einer solchen Rahmeneinrichtung.

Die US 6 511 096 B1 offenbart einen Fahrwerkhilfsrahmen für ein Fahrzeug, wobei der Fahrwerkhilfsrahmen an einem Aufbau des Fahrzeugs befestigbar ist.

Die US 2016 / 257 335 A1 offenbart ein Verfahren zum Zusammenbau einer modularen Halterung für eine Fahrzeuglenkachse, wobei das Verfahren einen Vorfertigungsschritt umfasst, bei dem eine Basis ein erstes Modul umfasst.

Die US 2006/082 121 A1 offenbart ein Lenkgetriebemontagestruktur, welche mit einer Zwischenhalterung montiert ist und ein Lenkgetriebe zum Lenken von Rädern eines Fahrzeugs an einem Hilfsrahmen des Fahrzeugs aufweist. Die Zwischenhalterung hat einen zerbrechlichen Abschnitt, der bricht, wenn eine Kraft größer als eine vorbestimmte Kraft auf den zerbrechlichen Abschnitt ausgeübt wird, um einen stoßabsorbierenden Hub eines Motors des Fahrzeugs bereitzustellen.

Die DE 10 2011 010114 A1 offenbart ein Lenkmechanismus, welcher ein Lenkgetriebegehäuse und eine erste Befestigungsschelle, die fest daran befestigt ist, enthält. Eine zweite Befestigungsschelle ist in Bezug auf das Lenkgetriebegehäuse befestigt und mit einem anpassungsfähigen und mit einem festen Zustand konfiguriert. Der anpassungsfähige Zustand weist zwischen dem Lenkgetriebe und der zweiten Befestigungsschelle einen ersten Freiheitsgrad auf und der feste Zustand weist keine Freiheitsgrade auf.

Die EP 1 731 409 A1 offenbart einen vorderen Hilfsrahmen, welcher aus einer Aluminiumlegierung zu einem Rahmen ausgebildet ist, der im Wesentlichen in Form paralleler Kreuze oder in rechteckiger Form ausgebildet ist und aus linken und rechten vorderen Gelenkabschnitten und linken und rechten hinteren Gelenkabschnitten besteht, die an Ecken des Rahmens angeordnet sind, die im Wesentlichen in Form von parallelen Kreuzen oder der rechteckigen Form ausgebildet sind.

Die DE 38 71 923 T2 beschreibt allradangetriebene Fahrzeuge und insbesondere von einer Anordnung zur Abwandlung eines Rahmenquerträgers eines frontangetriebenen Fahrzeuges derart, dass durch Hinzufügen einer sich in Längsrichtung von der Vorderachse nach hinten erstreckenden Antriebswelleneinheit die Hinterachse des Fahrzeuges antreibbar ist.

Des Weiteren offenbart die JP 2011 - 240 787 A eine Rahmenstruktur für einen Fahrzeugaufbau.

Des Weiteren ist der DE 102 29 161 A1 eine Aufhängung als bekannt zu entnehmen, mit einem Lenkgetrieberahmen und mit einem Hilfsrahmen, der eine Mehrzahl von Längsträgern aufweist, die in Längsrichtung eines Fahrzeugrahmens angeordnet sind.

Aufgabe der vorliegenden Erfindung ist es, eine Rahmeneinrichtung und ein Fahrzeug zu schaffen, sodass auf gewichts- und kostengünstige Weise eine besonders hohe Steifigkeit realisiert werden kann.

Diese Aufgabe wird erfindungsgemäß durch eine Rahmeneinrichtung mit den Merkmalen des Patentanspruchs 1 sowie durch ein Fahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Rahmeneinrichtung für ein Fahrzeug, welches vorzugsweise als Kraftfahrzeug ausgebildet ist. Das Kraftfahrzeug kann dabei als Kraftwagen, insbesondere als Personenkraftwagen, ausgebildet sein. Die Rahmeneinrichtung umfasst wenigstens einen an einem Aufbau des Fahrzeugs befestigbaren und somit separat von dem Aufbau ausgebildeten Hilfsrahmen, der beispielsweise auch als Schemel, Fahrschemel, Achsschemel oder Achsträger bezeichnet wird beziehungsweise ausgebildet sein kann. Bei dem Aufbau handelt es sich vorzugsweise um eine selbsttragende Karosserie. Unter dem Merkmal, dass der Hilfsrahmen separat von dem Aufbau, insbesondere von der Karosserie, ausgebildet ist, ist insbesondere zu verstehen, dass der Hilfsrahmen kein Bestandteil des Aufbaus beziehungsweise der Karosserie ist.

Der Hilfsrahmen weist wenigstens oder genau zwei in Querrichtung des Hilfsrahmens voneinander beabstandete Längsträger auf. Insbesondere in Einbaulage des Hilfsrahmens beziehungsweise der Rahmeneinrichtung fällt die Querrichtung des Hilfsrahmens mit der Fahrzeugquerrichtung zusammen, wobei der Hilfsrahmen beziehungsweise die Rahmeneinrichtung die Einbaulage in vollständig hergestelltem Zustand des Fahrzeugs einnimmt. In diesem vollständig hergestelltem Zustand der Fahrzeugs sind die Rahmeneinrichtung und somit der Hilfsrahmen an dem Fahrzeug beziehungsweise an dem Aufbau montiert, das heißt gehalten beziehungsweise befestigt.

Der Hilfsrahmen umfasst darüber hinaus wenigstens einen Querträger aufweist, welcher sich zumindest im Wesentlichen in Querrichtung beziehungsweise in Fahrzeugquerrichtung erstreckt. Über den Querträger sind die Längsträger miteinander verbunden. Hierzu ist beispielsweise der Querträger beiden Ends an die Längsträger angebunden. Insbesondere ist es denkbar, dass der Hilfsrahmen den genannten Querträger und wenigstens oder genau einen weitere Querträger aufweist, sodass der Hilfsrahmen wenigstens oder genau zwei Querträger umfasst. Über die Querträger sind Längsträger miteinander verbunden, wobei die mehreren Querträger in Längsrichtung des Hilfsrahmens voneinander beabstandet sein können. Insbesondere in Einbaulage der Rahmeneinrichtung beziehungsweise des Hilfsrahmens fällt die Längsrichtung des Hilfsrahmens mit der Fahrzeuglängsrichtung zusammen. Wird somit im Folgenden die Längsrichtung genannt, so ist darunter gleichzeitig die Fahrzeuglängsrichtung zu verstehen und umgekehrt. Wird ferner im Folgenden die Querrichtung genannt, so ist darunter gleichzeitig die Fahrzeugquerrichtung zu verstehen und umgekehrt.

Um nun auf besonders kosten- und gewichtsgünstige Weise eine besonders hohe Steifigkeit insbesondere des Hilfsrahmens an sich und somit des Aufbaus realisieren zu können, ist es erfindungsgemäß vorgesehen, das die Rahmeneinrichtung wenigstens ein separat von dem Hilfsrahmen und separat von dem Aufbau ausgebildetes Trägerelement umfasst, welches wenigstens ein Anbindungselement aufweist. Mittels des Anbindungselements ist zumindest eine separat von dem Aufbau, separat von dem Hilfsrahmen und separat von dem Trägerelement ausgebildete Komponente des Fahrzeugs an dem Trägerelement befestigbar oder befestigt. Somit ist das Trägerelement ein Komponenten- oder Aggregateträger, an welchem zumindest die Komponente, insbesondere mehrere Komponenten, des Kraftfahrzeugs befestigbar oder befestigt ist beziehungsweise sind.

Außerdem umfasst die Rahmeneinrichtung ein separat von dem Aufbau, separat von dem Hilfsrahmen, separat von dem Trägerelement und separat von der Komponente ausgebildetes und somit zusätzlich zu dem Aufbau, zusätzlich zu dem Hilfsrahmen, zusätzlich zum Trägerelement und zusätzlich zu der Komponente vorgesehenes Lenkgetriebe für eine Lenkung des Fahrzeugs. Über das Lenkgetriebe ist beispielsweise in vollständig hergestellten Zustand des Fahrzeug ein im Innenraum des Fahrzeugs angeordnete oder anordenbare Lenkhandhabe mit mittels der Lenkhandhabe lenkbaren oder gelenkten Fahrzeugrädern des Kraftfahrzeugs gekoppelt oder koppelbar, sodass die Fahrzeugräder über das Lenkgetriebe mittels der Lenkhandhabe gelenkt und somit relativ zu dem Aufbau verschwenkt werden können. Bei der Lenkhandhabe handelt es sich beispielsweise um ein Lenkrad, welches um eine Lenkraddrehachse relativ zu dem Aufbau gedreht werden kann, um dadurch die Fahrzeugräder über das Lenkgetriebe zu lenken. Bei den Fahrzeugrädern handelt es sich um Bodenkontaktelemente, über welche das Fahrzeug in Fahrzeughochrichtung nach unten an einem Boden abstützbar oder abgestützt ist. Wird das Fahrzeug entlang des Bodens gefahren, während es über die Fahrzeugräder am Boden abgestützt ist, so rollen die Räder an dem Boden ab.

Des Weiteren ist es erfindungsgemäß vorgesehen, dass sowohl das Lenkgetriebe als auch das Trägerelement mittels ein und desselben Befestigungselements an dem Hilfsrahmen befestigt sind. Das Befestigungselement ist somit sowohl dem Lenkgetriebe als auch dem Trägerelement zugeordnet und wir genutzt, um sowohl das Lenkgetriebe als auch das Trägerelement, insbesondere gleichzeitig, an dem Hilfsrahmen zu befestigen. Hierdurch können die Teileanzahl und somit das Gewicht, die Kosten und der Bauraumbedarf besonders gering gehalten werden. Außerdem kann hierdurch der Hilfsrahmen mittels des Trägerelements effektiv ausgesteift werden, sodass eine besonders hohe Steifigkeit des Hilfsrahmens und somit des Aufbaus darstellbar ist.

Als besonders vorteilhaft hat es sich gezeigt, wenn sowohl das Lenkgetriebe als auch das Trägerelement an einer ersten Befestigungsstelle beziehungsweise in einem ersten Befestigungsbereich mittels ein und desselben und somit mittels des zuvor genannten Befestigungselements an dem Hilfsrahmen befestigt sind. Dabei sind sowohl das Lenkgetriebe als auch das Trägerelement darüber hinaus an einer von der ersten Befestigungsstelle beabstandeten zweiten Befestigungsstelle beziehungsweise in einem von dem ersten Befestigungsbereich beabstandeten zweiten Befestigungsbereich mittels ein und desselben Befestigungselements an dem Hilfsrahmen befestigt. Dies bedeutet, dass zumindest ein zweites Befestigungselement vorgesehen ist, welches ebenfalls sowohl dem Trägerelement als auch dem Lenkgetriebe, insbesondere gleichzeitig, zugeordnet ist und verwendet wird, um sowohl das Lenkgetriebe als auch das Trägerelement, insbesondere gleichzeitig, an dem Hilfsrahmen zu befestigen. Wieder mit anderen Worten ausgedrückt, sind die wenigstens zwei Befestigungsstellen vorgesehen, an welchen das Lenkgetriebe und das Trägerelement an dem Hilfsrahmen befestigt sind, wobei je Befestigungsstelle wenigstens oder genau ein Befestigungselement vorgesehen ist, mittels welchem an der jeweiligen Befestigungsstelle sowohl das Lenkgetriebe als auch das Trägerelement, insbesondere gleichzeitig, an dem Hilfsrahmen befestigt sind. Dadurch können die Teileanzahl, das Gewicht und die Kosten besonders gering gehalten werden, wobei gleichzeitig eine besonders hohe Steifigkeit realisiert werden kann.

Da die Befestigungsstellen voneinander beabstandet sind, ist es vorzugsweise vorgesehen, dass zwischen den Befestigungsstellen ein Luftspalt beziehungsweise ein Luftraum angeordnet ist, sodass die Befestigungsstellen über diesen, einen Zwischenraum darstellenden Luftraum voneinander beabstandet sind. Dabei erstreckt sich das beispielsweise als Brücke ausgebildete oder fungierende Trägerelement von einer der Befestigungsstellen hin zu der anderen Befestigungsstelle unterbrechungsfrei, sodass der Abstand zwischen den Befestigungsstellen durch das Trägerelement überbrückt ist. Dadurch kann der Hilfsrahmen besonders effektiv ausgesteift beziehungsweise versteift werden.

Eine weitere Ausführungsform zeichnet sich dadurch aus, dass die Befestigungsstellen in Querrichtung des Hilfsrahmens voneinander beabstandet sind. Somit erstreckt sich beispielsweise das Trägerelement in Querrichtung des Hilfsrahmens von der einen Befestigungsstelle hin zu der anderen Befestigungsstelle unterbrechungsfrei, sodass das Trägerelement beispielsweise als eine Querbrücke ausgebildet ist. Dadurch kann eine besonders hohe Steifigkeit gewährleistet werden.

Vorzugsweise sind die Befestigungsstellen in Längsrichtung des Hilfsrahmens auf gleicher Höhe angeordnet, sodass eine besonders hohe Steifigkeit gewährleistet werden kann.

Eine weitere Ausführungsform zeichnet sich dadurch aus, dass das Befestigungselement wenigstens oder genau ein Schraubelement umfasst, welches teilweise in einer ersten Öffnung des Lenkgetriebes und teilweise in einer zweiten Öffnung des Trägerelements angeordnet beziehungsweise aufgenommen ist. Dadurch können sowohl das Lenkgetriebe als auch das Trägerelement gewichts- und kostengünstig sowie steif an dem Hilfsrahmen angebunden werden.

Dabei hat es sich als besonders vorteilhaft gezeigt, wenn die Öffnungen als Durchgangsöffnungen ausgebildet sind, welche jeweils vollständig von dem Schraubelement durchdrungen sind. Dadurch können das Lenkgetriebe und das Trägerelement besonders steif und fest an den Hilfsrahmen angebunden werden.

Bei dem Schraubelement handelt es sich vorzugsweise um eine Schraube, welche ein erstes Gewinde aufweist. Das erste Gewinde ist vorzugsweise als ein Außengewinde ausgebildet.

Als besonders vorteilhaft hat es sich gezeigt, wenn der Hilfsrahmen eine dritte Öffnung aufweist, in welcher das Schraubelement aufgenommen ist. Vorzugsweise sind die erste Öffnung und die zweite Öffnung gewindefrei, insbesondere innengewindefrei, sodass das Schraubelement einfach und somit zeit- und kostengünstig durch die erste Öffnung und durch die zweite Öffnung hindurchgesteckt beziehungsweise in die erste Öffnung und in die zweite Öffnung eingesteckt werden kann.

Die dritte Öffnung kann als eine Gewindeöffnung ausgebildet sein und demzufolge ein mit dem ersten Gewinde korrespondierendes zweites Gewinde aufweisen, welches beispielsweise als ein Innengewinde ausgebildet ist. Dabei ist es denkbar, dass das Schraubelement in das zweite Gewinde eingeschraubt beziehungsweise mit dem zweiten Gewinde verschraubt ist. Dadurch können das Trägerelement und das Lenkgetriebe auf einfache, zeit- und kostengünstige Weise sowie besonders gewichtsgünstig und steif an den Hilfsrahmen angebunden werden.

Ferner ist es jedoch denkbar, dass die dritte Öffnung als eine dritte Durchgangsöffnung ausgebildet ist, welche von dem Schraubelement vollständig durchdrungen ist. Dabei ist es vorzugsweise vorgesehen, dass die dritte Öffnung, gewindefrei, insbesondere innengewindefrei, ist, sodass das Schraubelement besonders einfach in die dritte Öffnung eingesteckt beziehungsweise durch die dritte Öffnung hindurchgesteckt werden kann.

Um eine besonders hohe Steifigkeit zu realisieren, ist es in weiterer Ausgestaltung der Erfindung vorgesehen, dass das Befestigungselement ein zweites Schraubelement aufweist, mit welchem das erste Schraubelement verschraubt ist. Das zweite Schraubelement ist beispielsweise eine Mutter, welche ein insbesondere mit dem ersten Gewinde korrespondierendes zweites Gewinde aufweist. Das zweite Gewinde ist beispielsweise ein Innengewinde.

Die Rahmeneinrichtung umfasst die zusätzlich zu dem Lenkgetriebe vorgesehene Komponente, welche somit bei dieser Ausführungsform Bestandteil der Rahmeneinrichtung ist. Die Komponente ist dabei mittels des Anbindungselements, insbesondere reversibel lösbar, an dem Trägerelement befestigt und dadurch an dem Trägerelement gehalten.

Dabei hat es sich als vorteilhaft gezeigt, wenn die Komponente als ein Bauelement einer Klimaanlage für das Fahrzeug ausgebildet ist. Beispielsweise handelt es sich bei der Komponente um einen Klimakompressor, mittels welchem ein Kältemittel der Klimaanlage verdichtet werden kann. Ferner ist es denkbar, dass die Komponente als ein zum Speichern von elektrischer Energie ausgebildeter Energiespeicher ausgebildet ist, welcher beispielsweise als eine Batterie, insbesondere als eine Hochvoltbatterie (HV-Batterie), ausgebildet sein kann. Außerdem ist es möglich, dass die Komponente als ein Antriebsmotor ausgebildet ist, mittels welchem das Fahrzeug antreibbar ist. Somit ist das Fahrzeug beispielsweise ein Kraftfahrzeug. Der Antriebsmotor kann als eine Verbrennungskraftmaschine beziehungsweise als ein Verbrennungsmotor ausgebildet sein. Ferner ist es denkbar, dass der Antriebsmotor eine elektrische Maschine ist, welche in einem Motorbetrieb und somit als Elektromotor betrieben werden kann. Mittels des Elektromotors kann das Fahrzeug beispielsweise, insbesondere rein, elektrisch angetrieben werden. Somit kann das Fahrzeug als ein Elektrofahrzeug, insbesondere als ein batterieelektrisches Fahrzeug, ausgebildet sein. Ist die Komponente beispielsweise als der zuvor genannte Antriebsmotor ausgebildet, so ist das Trägerelement beispielsweise ein Motorträger zum Tragen beziehungsweise Haltern des Antriebsmotors.

Der Erfindung liegen insbesondere die folgenden Erkenntnisse zugrunde: In Fahrzeugen wie beispielsweise Elektrofahrzeugen ergibt sich aus Bauraumgründen und aufgrund einer Anordnung von Befestigungselementen in einem zur Verfügung stehenden Bauraum insbesondere im Bereich einer Vorderachse oft, dass sich eine Lenkungsanbindung und eine Struktur für eine Motoraufhängung, das heißt zum Haltern eines Antriebsmotors und/oder von einem Antriebsmotor unterschiedliche Bauteile wie beispielsweise Klimaanlagen, Bauteile, Batterien, et cetera im gleichen Bauraum befinden, insbesondere dann, wenn der Antriebsmotor und/oder sich über dem Antriebsmotor befindende Bauteile aus Gründen einer vorteilhaften Montage an dem beispielsweise als Achsträger, insbesondere als Vorderachsträger, ausgebildeten Hilfsrahmen gelagert sind.

Erfindungsgemäß ist nun das Trägerelement als eine zumindest die genannte Komponente tragende Struktur vorgesehen, welche beispielsweise an oder auf einer Achse, insbesondere an oder auf einer Vorderachse beziehungsweise im Bereich einer Achse, insbesondere im Bereich einer Vorderachse, angeordnet sein kann. Beispielsweise ist die tragende Struktur an einer Front oder in einem Frontbereich des Fahrzeugs über dem Antriebsmotor angeordnet. Ferner ist es denkbar, dass die tragende Struktur in Fahrzeughochrichtung unter dem Antriebsmotor und/oder in Fahrzeuglängsrichtung hinter dem Antriebsmotor angeordnet ist. Die tragende Struktur ist nun gemeinsam mit der Lenkung beziehungsweise mit dem Lenkgetriebe an dem Hilfsrahmen befestigt und dabei beispielsweise mit dem Hilfsrahmen verschraubt beziehungsweise an den Hilfsrahmen angeschraubt. Hierdurch ist beispielsweise ein Schraubverband geschaffen, welcher das Lenkgetriebe, den Hilfsrahmen und das beispielsweise als Quertraverse ausgebildete oder fungierende Trägerelement umfasst. Dieser Schraubverband kann ein Modul sein, welches besonders einfach gehandhabt und montiert werden kann. Das Trägerelement, der Hilfsrahmen, und die Lenkung beziehungsweise das Lenkgetriebe sind separat voneinander ausgebildete und miteinander verbundene Einzelteile des Lenkverbands. Je nach Ausführung können die Einzelteile so ausgeführt sein, dass sie sich gegenseitig stützen. Beispielsweise kann eine besonders vorteilhafte Ausgestaltung des Lenkgetriebes, insbesondere dessen Lenkungsgehäuses, dargestellt werden, da beispielsweise obere Anschraubstutzen nicht gekröpft werden müssen. Beispielsweise ist das Lenkgetriebe über das genannte Lenkungsgehäuse jeweils mittels desselben Befestigungselements an dem Hilfsrahmen befestigt.

Die genannten Befestigungsstellen weisen beispielsweise jeweils eine Abstütz- oder Kontaktfläche auf, an welcher das Lenkgetriebe, insbesondere das Lenkungsgehäuse, oder aber vorzugsweise das Trägerelement, insbesondere direkt, abgestützt ist und somit anliegt. Ist das jeweilige Befestigungselement beispielsweise als ein Schraubelement ausgebildet, sodass das Lenkgetriebe und das Trägerelement an den Hilfsrahmen angeschraubt beziehungsweise mit dem Hilfsrahmen verschraubt sind, so ist die jeweilige Abstützfläche eine Anschraubfläche. Da die Befestigungsstellen voneinander beabstandet sind, sind auch die Abstützflächen voneinander beabstandet, sodass zwischen den Abstützflächen ein insbesondere in Querrichtung des Hilfsrahmens verlaufender Abstand existiert. Der Abstand wird auch als Distanz bezeichnet, welche durch das beispielsweise als Querstruktur fungierende Trägerelement überbrückt ist. Dabei kann beispielsweise eine besonders vorteilhafte Ausgestaltung des Trägerelements realisiert werden, da durch Verwendung des Lenkgetriebes eine quasi zweischnittige Anbindung realisiert werden kann.

Im Vergleich zu herkömmlichen Lösungen lässt sich ein Gewichts- und Kostenersparnis realisieren, da die Anzahl an Verbindungselementen zum Befestigen des Lenkgetriebes und des Trägerelements an dem Hilfsrahmen besonders gering gehalten werden kann. Außerdem kann eine besonders einfache und steife Ausgestaltung des Hilfsrahmens realisiert werden. Vorteilhaft ausgeführt können die Einzelteile einander in einer Art und Weise stützen, dass im Vergleich zu herkömmlichen Lösungen Gewicht gespart und Steifigkeit gewonnen werden kann.

Ein zweiter Aspekt der Erfindung betrifft ein vorzugsweise als Kraftfahrzeug, insbesondere als Kraftwagen und ganz insbesondere als Personenkraftwagen ausgebildetes Fahrzeug, welches einen beispielsweise als selbsttragende Karosserie ausgebildeten Aufbau und wenigstens oder genau eine erfindungsgemäße Rahmeneinrichtung gemäß dem ersten Aspekt der Erfindung umfasst. Die Rahmeneinrichtung umfasst wenigstens einen separat von dem Aufbau ausgebildeten und an dem Aufbau befestigten Hilfsrahmen, welcher zwei in Fahrzeugquerrichtung voneinander beabstandete Längsträger aufweist. Außerdem weist der Hilfsrahmen wenigstens einen Querträger auf, über welchen die Längsträger miteinander verbunden sind.

Um nun auf besonders gewichts- und kostengünstige Weise eine besonders hohe Steifigkeit zu realisieren, ist es bei dem zweiten Aspekt der Erfindung vorgesehen, dass das Fahrzeug, insbesondere die Rahmeneinrichtung, wenigstens ein separat von dem Hilfsrahmen und separat von dem Aufbau ausgebildetes Trägerelement umfasst, welches wenigstens ein Anbindungselement aufweist. Mittels des Anbindungselements ist zumindest eine separat von dem Aufbau, separat von dem Hilfsrahmen und separat von dem Trägerelement ausgebildete Komponente des Fahrzeugs an dem Trägerelement befestigt und somit gehalten.

Des Weiteren umfasst das Fahrzeug, insbesondere die Rahmeneinrichtung, ein separat von dem Hilfsrahmen, separat von dem Trägerelement, separat von dem Aufbau und separat von der Komponente ausgebildetes und zusätzlich dazu vorgesehenes Lenkgetriebe einer Lenkung des Fahrzeugs, wobei sowohl das Lenkgetriebe als auch das Trägerelement mittels ein und desselben Befestigungselements an dem Hilfsrahmen befestigt sind.

Des Weiteren umfasst die Rahmeneinrichtung die zusätzlich zu dem Lenkgetriebe vorgesehene Komponente, welche mittels des Anbindungselements an dem Trägerelement befestigt ist, wobei die Komponente als ein Bauelement einer Klimaanlage für das Fahrzeug oder als ein zum Speichern von elektrischer Energie ausgebildeter Energiespeicher oder als ein Antriebsmotor, mittels welchem das Fahrzeug antreibbar ist.

Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Zu der Erfindung gehören auch Weiterbildungen des erfindungsgemäßen Fahrzeugs, die Merkmale aufweisen, wie sie bereits im Zusammenhang mit den Weiterbildungen der erfindungsgemäßen Rahmeneinrichtung beschrieben worden sind. Aus diesem Grund sind die entsprechenden Weiterbildungen des erfindungsgemäßen Fahrzeugs hier nicht noch einmal beschrieben.

Das erfindungsgemäße Fahrzeug ist vorzugsweise als Kraftfahrzeug und bevorzugt als Kraftwagen, insbesondere als Personenkraftwagen oder Lastkraftwagen, oder als Personenbus oder Motorrad ausgestaltet. Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Perspektivansicht einer erfindungsgemäßen Rahmeneinrichtung;
- Fig. 2: ausschnittsweise eine schematische Perspektivansicht der Rahmeneinrichtung; und
- Fig. 3: ausschnittsweise eine schematische Schnittansicht der Rahmeneinrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsform umfassen. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

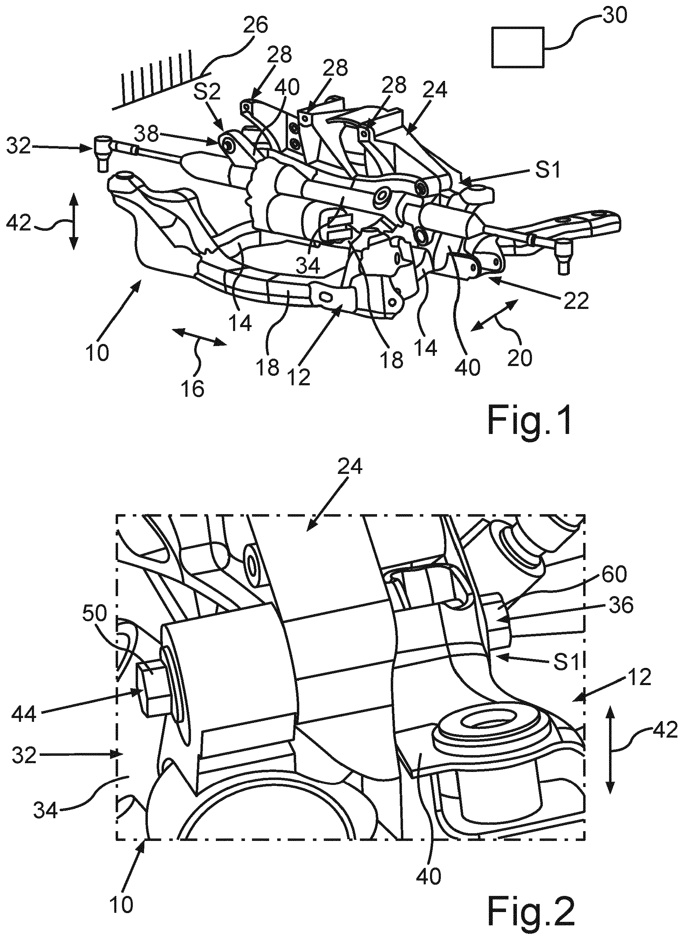

Fig. 1 zeigt in einer schematischen Perspektivansicht eine Rahmeneinrichtung 10 für ein Fahrzeug, welches vorzugsweise als Kraftfahrzeug und dabei beispielsweise als Kraftwagen, insbesondere als Personenkraftwagen, ausgebildet ist. Dies bedeutet, dass das Fahrzeug in seinem vollständig hergestellten Zustand die Rahmeneinrichtung 10 aufweist. Außerdem umfasst das Fahrzeug in seinem vollständig hergestellten Zustand eine vorzugsweise als selbsttragende Karosserie ausgebildeten Aufbau. Dabei ist die Rahmeneinrichtung 10 separat von dem Aufbau ausgebildet und in dem vollständig hergestellten Zustand des Fahrzeugs an der Karosserie montiert und somit an der Karosserie gehalten.

Die Rahmeneinrichtung 10 weist dabei einen separat von der Karosserie ausgebildeten und an der Karosserie befestigbaren oder befestigten Hilfsrahmen 12 auf. Der Hilfsrahmen 12 weist wenigstens oder genau zwei Längsträger 14 auf, welche in Querrichtung des Hilfsrahmens 12 voneinander beabstandet sind. Die Querrichtung des Hilfsrahmens 12 ist in Fig. 1 durch einen Doppelpfeil 16 veranschaulicht und fällt im vollständig hergestellten Zustand des Kraftfahrzeugs mit der Fahrzeugquerrichtung zusammen. Dabei nimmt im vollständig hergestellten Zustand des Fahrzeugs die Rahmeneinrichtung 10 ihre Einbaulage ein, in welcher die Querrichtung des Hilfsrahmens 12 mit der Fahrzeugquerrichtung zusammenfällt. Außerdem nimmt dabei der Hilfsrahmen 12 im vollständig hergestellten Zustand des Fahrzeugs seine Einbaulage ein, in welcher die Querrichtung des Hilfsrahmens 12 mit der Fahrzeugquerrichtung zusammenfällt.

Der Hilfsrahmen 12 weist darüber hinaus wenigstens oder genau zwei Querträger 18 auf, welche in Längsrichtung des Hilfsrahmens 12 voneinander beabstandet sind. Die Längsrichtung des Hilfsrahmens 12 ist dabei in Fig. 1 durch einen Doppelpfeil 20 veranschaulicht und fällt in der Einbaulage und somit im vollständig hergestellten Zustand des Fahrzeugs mit der Fahrzeuglängsrichtung zusammen. Dabei sind die Längsträger 14 über die Querträger 18 miteinander verbunden.

Der Hilfsrahmen 12 weist beispielsweise Koppelelemente auf, von welchen in Fig. 1 ein mit 22 bezeichnetes Koppelelement erkennbar ist. Mittels der jeweiligen Koppelelements ist wenigstens oder genau ein Radlenker zum Führen eines jeweiligen Fahrzeugrads des Fahrzeugs gelenkig an dem Hilfsrahmen 12 zu halten oder gehalten, sodass das jeweilige Fahrzeugrad über den jeweiligen Radlenker gelenkig an dem Hilfsrahmen 12 gehalten ist. mittels des jeweiligen Radlenkers wird das jeweilige Fahrzeugrad relativ zu dem Hilfsrahmen 12 und relativ zu der Karosserie geführt. Das jeweilige Fahrzeugrad wird einfach auch als Rad bezeichnet und ist ein Bodenkontaktelement, über welches das Fahrzeug in Fahrzeughochrichtung nach unten an einem Boden abstützbar oder abgestützt ist.

Um nun auf besonders gewichts- und kostengünstige Weise eine besonders hohe Steifigkeit der Rahmeneinrichtung 10 und des Aufbaus (Karosserie) realisieren zu können, umfassen die Rahmeneinrichtung 10 und somit das Fahrzeug wenigstens ein separat von dem Hilfsrahmen 12 und separat von der Karosserie ausgebildetes Trägerelement 24, welches bei dem in den Fig. gezeigten Ausführungsbeispiel als Querstruktur beziehungsweise Querbrücke ausgebildet ist beziehungsweise fungiert. Die Karosserie ist in Fig. 1 besonders schematisch dargestellt und mit 26 bezeichnet. Das Trägerelement 24 weist Anbindungselemente 28 auf, mittels welchen wenigstens eine separat von der Karosserie 26, separat von dem Hilfsrahmen 12 und separat von dem Trägerelement 24 ausgebildet, zusätzlich dazu vorgesehene und in Fig. 1 besonders schematisch dargestellte Komponente 30 des Fahrzeugs an dem Trägerelement 24 und somit an der Rahmeneinrichtung 10 befestigbar oder befestigt ist. Bei der Komponente 30 handelt es sich beispielsweise um einen zum Speichern von elektrischer Energie ausgebildeten Energiespeicher, welcher als Batterie, insbesondere als Hochvoltbatterie ausgebildet sein kann. Ferner kann es sich bei der Komponente 30 um ein Bauelement einer Klimaanlage des Fahrzeugs handeln, wobei die Komponente 30 beispielsweise als ein Kältemittelverdichter oder Kältemittelkompressor ausgebildet ist. Außerdem ist es denkbar, dass die Komponente 30 eine elektrische Maschine ist, mittels welcher die zuvor genannte Fahrzeugräder und somit das Kraftfahrzeug elektrisch angetrieben werden können. Somit ist das Trägerelement 24 beispielsweise ein Motorträger oder eine Motorlagerung, an dem beziehungsweise der die elektrische Maschine 30 gehalten beziehungsweise gelagert ist.

Die Rahmeneinrichtung 10 und somit das Fahrzeug umfassen außerdem ein separat von der Karosserie 26, separat von dem Hilfsrahmen 12 separat von der Komponente 30 und separat von dem Trägerelement 24 ausgebildetes und zusätzlich dazu vorgesehenes Lenkgetriebe 32 für eine Lenkung des Fahrzeugs. Mittels der Lenkung können beispielsweise die zuvor genannten Fahrzeugräder gelenkt und somit um eine jeweilige Lenkachse relativ zu der Karosserie 26 verschwenkt werden, um dadurch beispielsweise Spurwechsel und Kurvenfahrten des Fahrzeugs zu bewirken.

Im vollständig hergestellten Zustand des Fahrzeugs ist in dessen Innenraum eine Lenkhandhabe angeordnet, welche relativ zu der Karosserie 26 beispielsweise vom Fahrer des Fahrzeugs bewegt werden kann. Die Lenkhandhabe ist beispielsweise ein Lenkrad, welches um eine Lenkraddrehachse relativ zu der Karosserie 26 gedreht werden kann. Die Lenkhandhabe ist über das Lenkgetriebe 32 beziehungsweise über die Lenkung mit den Fahrzeugrädern gekoppelt, sodass die Fahrzeugräder über die Lenkung und somit über das Lenkgetriebe 32 mittels der Lenkhandhabe gelenkt werden können. Hierzu wird die Lenkhandhabe beispielsweise von dem Fahrer relativ zu der Karosserie 26 bewegt, insbesondere um die Lenkraddrehachse gedreht. Das Lenkgetriebe 32 weist ein Gehäuse 34 auf, welches auch als Lenkgehäuse oder Lenkungsgehäuse bezeichnet wird. Beispielsweise ist das Lenkgetriebe 32 als hydraulisches, elektrisches, elektromechanisches oder elektrohydraulisches Lenkgetriebe ausgebildet, sodass beispielsweise das Lenkgetriebe 32 den Fahrer beim Lenken des Fahrzeugs elektrisch, hydraulisch, elektrohydraulisch oder elektromechanisch unterstützen kann.

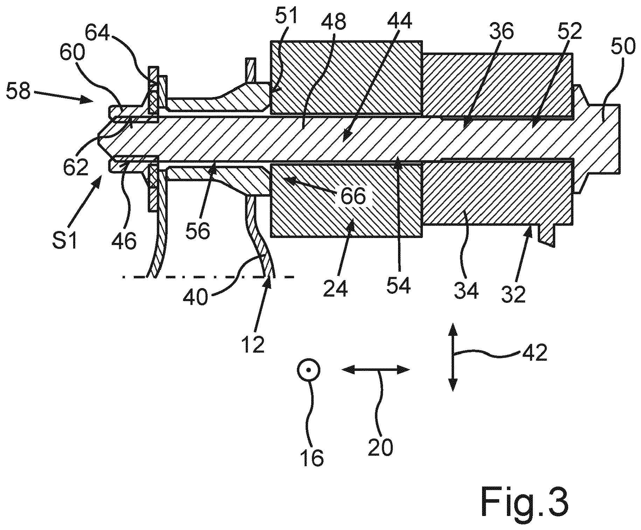

Des Weiteren ist es vorgesehen, dass - wie in Zusammenschau mit Fig. 2 und 3 erkennbar ist - sowohl das Lenkgetriebe 32 als auch das Trägerelement 24 mittels ein und desselben Befestigungselements 36 beziehungsweise 38 an dem Hilfsrahmen 12 befestigt sind. Dabei sind sowohl das Lenkgetriebe 32 als auch das Trägerelement 24 an einer ersten Befestigungsstelle S1 mittels ein und desselben Befestigungselements 36 an dem Hilfsrahmen 12 befestigt. Außerdem sind sowohl das Lenkgetriebe 32 als auch das Trägerelement 24 an einer von der ersten Befestigungsstelle S1 in Querrichtung beabstandeten zweiten Befestigungsstelle S2 mittels ein und desselben Befestigungselements 38 an dem Hilfsrahmen 12 befestigt. Die Befestigungsstellen S1 und S2 sind dabei in Querrichtung des Hilfsrahmens 12 voneinander beabstandet, derart, dass in Querrichtung des Hilfsrahmens 12 zwischen den Befestigungsstellen S1 und S2 ein Luftraum, das heißt ein mit Luft gefüllter Zwischenraum angeordnet ist. Somit sind die Befestigungsstellen S1 und S2 in Querrichtung über diesen Zwischenraum voneinander beabstandet, sodass eine entlang der Querrichtung verlaufende und auch als Abstand bezeichnete Distanz zwischen den Befestigungsstellen S1 und S2 existiert. Das beispielsweise einstückige oder mehrteilige Trägerelement 24 erstreckt sich dabei in Fahrzeugquerrichtung unterbrechungsfrei von der Befestigungsstelle S1 zu der Befestigungsstelle S2 hin beziehungsweise umgekehrt, wodurch die zuvor genannte Distanz durch das Trägerelement 24 überbrückt ist.

Der Hilfsrahmen 12 weist beispielsweise zwei in Querrichtung voneinander beabstandete Säulen 40 auf, welche sich in Hochrichtung des Hilfsrahmens 12 von den Längsträgern nach oben hin weg erstrecken. Dabei ist die Hochrichtung in Fig. 1 durch einen Doppelpfeil 42 veranschaulicht, wobei die Hochrichtung in der Einbaulage mit der Fahrzeughochrichtung zusammenfällt. Die Befestigungsstellen S1 und S2 sind dabei durch die Säulen 40 gebildet. Somit sind das Lenkgetriebe 32 und das Trägerelement 24 mittels ein und derselben Befestigungselemente 36 und 38 an die Säulen 40 angebunden und somit an dem Hilfsrahmen 12 befestigt, wodurch der Hilfsrahmen 12 effektiv ausgesteift ist.

Wie besonders gut aus Fig. 2 und 3 erkennbar ist, umfasst das jeweilige Befestigungselement 36 beziehungsweise 38 ein Schraubelement in Form einer Schraube 44, welche ein erstes Gewinde in Form eines Außengewindes 46 aufweist. Das Außengewinde 46 ist an einem Schraubenschaft 48 der Schraube 44 ausgebildet, wobei der einfach auch als Schaft bezeichnete Schraubenschaft 48 mit einem Schraubenkopf 50 der Schraube 44 verbunden ist. Insbesondere kann der einfach auch als Kopf bezeichnete Schraubenkopf 50 einstückig mit dem Schraubenschaft 48 ausgebildet sein. Die Schraube 44 ist entlang ihrer Längserstreckungsrichtung über den Schraubenkopf 50, insbesondere direkt, an dem Gehäuse 34 und somit an dem Lenkgetriebe 32 abgestützt, wobei die Längserstreckungsrichtung der Schraube 44 mit der Längsrichtung des Hilfsrahmens 12 zusammenfällt. **In** Längserstreckungsrichtung der Schraube 44 ist das Gehäuse 34 zwischen dem Trägerelement 24 und dem Schraubenkopf 50 angeordnet, sodass der Schraubenkopf 50 in Längserstreckungsrichtung der Schraube 44 unter Vermittlung des Gehäuses 34 an dem Trägerelement 24 abgestützt ist. Außerdem ist in Längserstreckungsrichtung der Schraube 44 das Trägerelement 24 zwischen dem Gehäuse 34 und der jeweiligen Säule 40 beziehungsweise dem Hilfsrahmen 12 angeordnet, sodass in Längserstreckungsrichtung der Schraube 44 das Gehäuse 34 unter Vermittlung des Trägerelements 24 an der Säule 40 beziehungsweise an dem Hilfsrahmen 12 abgestützt ist. Hierbei ist beispielsweise das Trägerelement 24 entlang der Längserstreckungsrichtung der Schraube 44, insbesondere direkt, an der Säule 40, insbesondere an einer Abstützfläche 51 der Säule 40 beziehungsweise des Hilfsrahmens 12, abgestützt. Somit liegt beispielsweise das Trägerelement 24 entlang der Längserstreckungsrichtung der Schraube 44 direkt an der Abstützfläche 51 an.

Außerdem ist aus Fig. 3 erkennbar, dass das Gehäuse 34 eine erste Öffnung 52 in Form einer ersten Durchgangsöffnung, das Trägerelement 24 eine zweite Öffnung 54 in Form einer zweiten Durchgangsöffnung und die Säule 40 beziehungsweise der Hilfsrahmen 12 eine dritte Öffnung 56 in Form einer dritten Durchgangsöffnung aufweist. Die Öffnungen 52, 54 und 56 sind gewindelos beziehungsweise gewindefrei, sodass die Schraube 44 entlang ihrer Längserstreckungsrichtung besonders einfach durch die Durchgangsöffnungen hindurch gesteckt werden kann, insbesondere so lange, bis der Schraubenkopf 50 entlang der Längserstreckungsrichtung der Schraube 44 in Stützanlage mit dem Gehäuse 34 kommt. Vorliegend liegt der Schraubenkopf 50 entlang der Längserstreckungsrichtung der Schraube 44, insbesondere direkt, an dem Gehäuse 34 an. Die Durchgangsöffnungen sind dabei jeweils vollständig von der Schraube 44, insbesondere von dem Schraubenschaft 48, durchdrungen, insbesondere derart, dass der Schraubenschaft 48 auf einer in Längserstreckungsrichtung der Schraube 44 dem Trägerelement 24 und dem Gehäuse 34 abgewandten Seite 58 der Säule 40 aus der Öffnung 56 herausragt. Dabei ragt insbesondere das Außengewinde 46 auf der Seite 58 aus der Öffnung 56 heraus.

Dabei umfasst das jeweilige Befestigungselement 36 beziehungsweise 38 ein zweites Schraubelement vorliegend in Form einer Mutter 60, welche ein zweites Gewinde in Form eines mit dem Außengewinde 46 korrespondierenden Innengewindes 62 aufweist. Dabei ist das Außengewinde 46 in das Innengewinde 62 eingeschraubt, sodass die Schraube 44 mit der Mutter 60 verschraubt ist. Die Mutter 60 ist dabei entlang der Längserstreckungsrichtung der Schraube 44 an einer zweiten Abstützfläche 64 der Säule 40 beziehungsweise des Hilfsrahmens 12, insbesondere direkt, abgestützt, sodass beispielsweise die Mutter 60 direkt an der Abstützfläche 64 anliegt. Während die Abstützfläche 64 auf der Seite 58 angeordnet ist, ist die Abstützfläche 51 auf einer der Abstützfläche 64 in Längserstreckungsrichtung der Schraube 44 abgewandten zweiten Seite 66 der Säule 40 beziehungsweise des Hilfsrahmens 12 angeordnet. Dabei ist die Seite 66 der Mutter 60 entlang der Längserstreckungsrichtung der Schraube 44 abgewandt. Insgesamt ist erkennbar, dass das Gehäuse 34 und somit das Lenkgetriebe 32 und das Trägerelement 24 mittels des Befestigungselements 36 beziehungsweise 38 und vorliegend mittels der Schraube 44 und mittels der Mutter 60 gegen den Hilfsrahmen 12 gespannt und dadurch an dem Hilfsrahmen 12, insbesondere reversibel lösbar, befestigt sind. Hierzu sind das Außengewinde 46 und das Innengewinde 62 miteinander verschraubt.

Insgesamt ist erkennbar, dass das Trägerelement 24 eine die Komponente 30 tragende Struktur ist, welche gemeinsam mit der Lenkung mit dem Hilfsrahmen 12 verschraubt beziehungsweise an den Hilfsrahmen 12 angeschraubt wird. Dadurch wird ein Schraubverband geschaffen, welcher das als Quertraverse ausgebildete Trägerelement 24, die Lenkung beziehungsweise das Lenkgetriebe 32 und den Hilfsrahmen 12 umfasst. Da vorliegend das Trägerelement 24 und das Lenkgetriebe 32 durch Schrauben an dem Hilfsrahmen 12 befestigt sind, ist die jeweilige Abstützfläche 51 beziehungsweise 64 eine auch als Schraubfläche bezeichnete Anschraubfläche. Die jeweilige Schraubfläche verläuft beispielsweise in einer Ebene, welche durch die Fahrzeugquerrichtung und die Fahrzeughochrichtung aufgespannt ist. Durch diese Anbindung des Lenkgetriebes 32 und des Trägerelements 24 an den Hilfsrahmen 12 können die Anzahl an Befestigungselementen und Befestigungsstellen besonders gering gehalten werden, sodass die Kosten und das Gewicht besonders gering gehalten werden können. Außerdem können der Hilfsrahmen 12 und insbesondere das Trägerelement 24 und das Lenkgetriebe 32 vorteilhaft ausgestaltet werden, um eine hohe Steifigkeit und ein geringes Gewicht realisieren zu können.

## Patentansprüche

1. Rahmeneinrichtung (10) für ein Fahrzeug, mit einem an einem Aufbau (26) des Fahrzeugs befestigbaren Hilfsrahmen (12), welcher zwei in Querrichtung (16) des Hilfsrahmens (12) voneinander beabstandete Längsträger (14) und wenigstens einen Querträger (18) aufweist, über welchen die Längsträger (14) miteinander verbunden sind, wobei die Rahmeneinrichtung (10) umfasst:
- wenigstens ein separat von dem Hilfsrahmen (12) ausgebildetes Trägerelement (24), welches wenigstens ein Anbindungselement (28) aufweist, mittels welchem zumindest eine Komponente (30) des Fahrzeugs an dem Trägerelement (24) befestigbar ist; und
- ein separat von dem Hilfsrahmen (12) und separat von dem Trägerelement (24) ausgebildetes Lenkgetriebe (32) für eine Lenkung des Fahrzeugs, wobei sowohl das Lenkgetriebe (32) als auch das Trägerelement (24) mittels ein und desselben Befestigungselements (36) an dem Hilfsrahmen (12) befestigt sind,
**dadurch gekennzeichnet, dass**
- die Rahmeneinrichtung (10) die zusätzlich zu dem Lenkgetriebe (32) vorgesehene Komponente (30) umfasst, welche mittels des Anbindungselements (28) an dem Trägerelement (24) befestigt ist, wobei
- die Komponente (30) als ein Bauelement einer Klimaanlage für das Fahrzeug oder als ein zum Speichern von elektrischer Energie ausgebildeter Energiespeicher oder als ein Antriebsmotor, mittels welchem das Fahrzeug antreibbar ist, ausgebildet ist.

2. Rahmeneinrichtung (10) nach Anspruch 1,
**dadurch gekennzeichnet, dass**
sowohl das Lenkgetriebe (32) als auch das Trägerelement (24) an einer ersten Befestigungsstelle (S1) mittels ein und desselben Befestigungselements (36) an dem Hilfsrahmen (12) befestigt sind, wobei sowohl das Lenkgetriebe (32) als auch das Trägerelement (24) an einer von der ersten Befestigungsstelle (S1) beabstandeten zweiten Befestigungsstelle (S2) mittels ein und desselben Befestigungselements (38) an dem Hilfsrahmen (12) befestigt sind.

3. Rahmeneinrichtung (10) nach Anspruch 2,
**dadurch gekennzeichnet, dass**
die Befestigungsstellen (S1, S2) in Querrichtung (16) des Hilfsrahmens (12) voneinander beabstandet sind.

4. Rahmeneinrichtung (10) nach einem der vorhergehenden Ansprüche,
**dadurch gekennzeichnet, dass**
das Befestigungselement (36, 38) ein Schraubelement (44) umfasst, welches teilweise in einer ersten Öffnung (52) des Lenkgetriebes (32) und teilweise in einer zweiten Öffnung (54) des Trägerelements (24) angeordnet ist.

5. Rahmeneinrichtung (10) nach Anspruch 4,
**dadurch gekennzeichnet, dass**
die Öffnungen (52, 54) als Durchgangsöffnungen ausgebildet sind, welche jeweils vollständig von dem Schraubelement (44) durchdrungen sind.

6. Rahmeneinrichtung (10) nach Anspruch 5,
**dadurch gekennzeichnet, dass**
der Hilfsrahmen (12) eine dritte Öffnung (56) aufweist, in welcher das Schraubelement (44) aufgenommen ist.

7. Rahmeneinrichtung (10) nach einem der Ansprüche 4 bis 6,
**dadurch gekennzeichnet, dass**
das Befestigungselement (36, 38) ein zweites Schraubelement (60) aufweist, mit welchem das erste Schraubelement (44) verschraubt ist.

8. Fahrzeug, mit einem Aufbau (26), und mit einer Rahmeneinrichtung (10), welche wenigstens einen separat von dem Aufbau (26) ausgebildeten und an dem Aufbau (26) befestigten Hilfsrahmen (12) umfasst, welcher zwei in Fahrzeugquerrichtung (16) voneinander beabstandete Längsträger (14) und wenigstens einen Querträger (18) aufweist, über welchen die Längsträger (14) miteinander verbunden sind, wobei die Rahmeneinrichtung (10) umfasst:
- wenigstens ein separat von dem Hilfsrahmen (12) und separat von dem Aufbau (26) ausgebildetes Trägerelement (24), welches wenigstens ein Anbindungselement (28) aufweist, mittels welchem zumindest eine separat von dem Aufbau (26), separat von dem Hilfsrahmen (12) und separat von dem Trägerelement (24) ausgebildete Komponente (30) des Fahrzeugs an dem Trägerelement (24) befestigt ist; und
- ein separat von dem Hilfsrahmen (12), separat von dem Trägerelement (24), separat von dem Aufbau (26) und separat von der Komponente (30) ausgebildetes und zusätzlich zu der Komponente (30) vorgesehenes Lenkgetriebe (32) einer Lenkung des Fahrzeugs, wobei sowohl das Lenkgetriebe (32) als auch das Trägerelement (24) mittels ein und desselben Befestigungselements (36) an dem Hilfsrahmen (12) befestigt sind,
**dadurch gekennzeichnet, dass**
- die Rahmeneinrichtung (10) die zusätzlich zu dem Lenkgetriebe (32) vorgesehene Komponente (30) umfasst, welche mittels des Anbindungselements (28) an dem Trägerelement (24) befestigt ist, wobei
- die Komponente (30) als ein Bauelement einer Klimaanlage für das Fahrzeug oder als ein zum Speichern von elektrischer Energie ausgebildeter Energiespeicher oder als ein Antriebsmotor, mittels welchem das Fahrzeug antreibbar ist, ausgebildet ist.

## Claims

1. Frame device (10) for a vehicle, with an auxiliary frame (12) that can be secured to a structure (26) of the vehicle, which auxiliary frame has two longitudinal members (14) spaced apart from one another in the transverse direction (16) of the auxiliary frame (12) and at least one cross member (18) which connects the longitudinal members (14) to one another, wherein the frame device (10) comprises:
- at least one support element (24) formed separately from the auxiliary frame (12), which support element has at least one attachment element (28) by means of which at least one component (30) of the vehicle can be secured to the support element (24); and
- a steering gear (32) configured separately from the auxiliary frame (12) and separately from the support element (24) for steering the vehicle, wherein both the steering gear (32) and the support element (24) are fastened to the auxiliary frame (12) by means of one and the same fastening element (36),
**characterized in that**
- the frame device (10) comprises the component (30) provided in addition to the steering gear (32), which component is fastened to the support element (24) by means of the attachment element (28), wherein
- the component (30) is configured as an element of an air conditioning system for the vehicle or as an energy storage device for storing electrical energy or as a drive motor, by means of which the vehicle can be driven.

2. Frame device (10) according to claim 1,
**characterized in that**
both the steering gear (32) and the support element (24) are fastened to the auxiliary frame (12) at a first fastening point (S1) by means of one and the same fastening element (36), wherein both the steering gear (32) and the support element (24) are fastened to the auxiliary frame (12) at a second fastening point (S2) spaced apart from the first fastening point (S1) by means of one and the same fastening element (38).

3. Frame device (10) according to claim 2,
**characterized in that**
the fastening points (S1, S2) are spaced apart from one another in the transverse direction (16) of the auxiliary frame (12).

4. Frame device (10) according to any one of the preceding claims,
**characterized in that**
the fastening element (36, 38) comprises a screw element (44) which is arranged partly in a first opening (52) of the steering gear (32) and partly in a second opening (54) of the support element (24).

5. Frame device (10) according to claim 4,
**characterized in that**
the openings (52, 54) are configured as through-openings, each of which is penetrated fully by the screw element (44).

6. Frame device (10) according to claim 5,
**characterized in that**
the auxiliary frame (12) has a third opening (56) for receiving the screw element (44).

7. Frame device (10) according to any one of claims 4 to 6,
**characterized in that**
the fastening element (36, 38) has a second screw element (60) to which the first screw element (44) is screwed.

8. Vehicle, with a structure (26), and with a frame device (10), which comprises at least one auxiliary frame (12) formed separately from the structure (26) and secured to the structure (26), which auxiliary frame has two longitudinal members (14) spaced apart from one another in the transverse direction of the vehicle (16) and at least one cross member (18) which connects the longitudinal members (14) to one another, wherein the frame device (10) comprises:
- at least one support element (24) formed separately from the auxiliary frame (12) and separately from the structure (26), which support element has at least one attachment element (28), by means of which at least one component (30) of the vehicle, which is formed separately from the structure (26), separately from the auxiliary frame (12) and separately from the support element (24), is secured to the support element (24); and
- a steering gear (32) of a steering system of the vehicle, which is formed separately from the auxiliary frame (12), separately from the support element (24), separately from the structure (26) and separately from the component (30) and is provided in addition to the component (30), wherein both the steering gear (32) and the support element (24) are secured to the auxiliary frame (12) by means of one and the same fastening element (36),
**characterized in that**
- the frame device (10) comprises the component (30) provided in addition to the steering gear (32), which component is fastened to the support element (24) by means of the attachment element (28), wherein
- the component (30) is configured as an element of an air conditioning system for the vehicle or as an energy storage device for storing electrical energy or as a drive motor, by means of which the vehicle can be driven.

## Revendications

1. Dispositif de châssis (10) pour un véhicule, avec un châssis auxiliaire (12) pouvant être fixé à une carrosserie (26) du véhicule, châssis auxiliaire qui présente deux longerons (14) espacés l'un de l'autre dans le sens transversal (16) du châssis auxiliaire (12) et au moins une traverse (18) par le biais de laquelle les longerons (14) sont reliés l'un à l'autre, dans lequel le dispositif de châssis (10) comprend :
- au moins un élément porteur (24) formé séparément du châssis auxiliaire (12), élément qui présente au moins un élément de liaison (28) au moyen duquel au moins un composant (30) du véhicule peut être fixé à l'élément porteur (24) ; et
- un mécanisme de direction (32) formé séparément du châssis auxiliaire (12) et séparément de l'élément porteur (24) pour une direction du véhicule, dans lequel aussi bien le mécanisme de direction (32) que l'élément porteur (24) sont fixés au châssis auxiliaire (12) au moyen d'un même élément de fixation (36),
**caractérisé en ce que**
- le dispositif de châssis (10) comprend le composant (30) fourni en plus du mécanisme de direction (32), composant qui est fixé à l'élément porteur (24) au moyen de l'élément de liaison (28), dans lequel
- le composant (30) est formé comme un élément structurel d'une climatisation pour le véhicule ou comme un dispositif de stockage d'énergie configuré pour le stockage d'énergie électrique ou comme un moteur d'entraînement au moyen duquel le véhicule peut être entraîné.

2. Dispositif de châssis (10) selon la revendication 1,
**caractérisé en ce que**
aussi bien le mécanisme de direction (32) que l'élément porteur (24) sont fixés en un premier point de fixation (S1) au châssis auxiliaire (12) au moyen d'un même élément de fixation (36), dans lequel aussi bien le mécanisme de direction (32) que l'élément porteur (24) sont fixés en un second point de fixation (S2) espacé du premier point de fixation (S1) au châssis auxiliaire (12) au moyen d'un même élément de fixation (38).

3. Dispositif de châssis (10) selon la revendication 2,
**caractérisé en ce que**
les points de fixation (S1, S2) sont espacés l'un de l'autre dans le sens transversal (16) du châssis auxiliaire (12).

4. Dispositif de châssis (10) selon l'une quelconque des revendications précédentes,
**caractérisé en ce que**
l'élément de fixation (36, 38) comprend un élément de vis (44) qui est agencé partiellement dans une première ouverture (52) du mécanisme de direction (32) et partiellement dans une deuxième ouverture (54) de l'élément porteur (24).

5. Dispositif de châssis (10) selon la revendication 4,
**caractérisé en ce que**
les ouvertures (52, 54) sont formées comme ouvertures traversantes qui sont traversées respectivement entièrement par l'élément de vis (44).

6. Dispositif de châssis (10) selon la revendication 5,
**caractérisé en ce que**
le châssis auxiliaire (12) présente une troisième ouverture (56) dans laquelle l'élément de vis (44) est reçu.

7. Dispositif de châssis (10) selon l'une quelconque des revendications 4 à 6,
**caractérisé en ce que**
l'élément de fixation (36, 38) présente un second élément de vis (60) avec lequel le premier élément de vis (44) est vissé.

8. Véhicule avec une carrosserie (26) et avec un dispositif de châssis (10) qui comprend au moins un châssis auxiliaire (12) formé séparément de la carrosserie (26) et fixé à la carrosserie (26), châssis auxiliaire qui présente deux longerons (14) espacés l'un de l'autre dans le sens transversal de véhicule (16) et au moins une traverse (18) par le biais de laquelle les longerons (14) sont reliés l'un à l'autre, dans lequel le dispositif de châssis (10) comprend :
- au moins un élément porteur (24) formé séparément du châssis auxiliaire (12) et séparément de la carrosserie (26), élément qui présente au moins un élément de liaison (28) au moyen duquel au moins un composant (30) du véhicule formé séparément de la carrosserie (26), séparément du châssis auxiliaire (12) et séparément de l'élément porteur (24) est fixé à l'élément porteur (24) ; et
- un mécanisme de direction (32) d'une direction du véhicule qui est formé séparément du châssis auxiliaire (12), séparément de l'élément porteur (24), séparément de la carrosserie (26) et séparément du composant (30) et est fourni en plus du composant (30), dans lequel aussi bien le mécanisme de direction (32) que l'élément porteur (24) sont fixés au châssis auxiliaire (12) au moyen d'un même élément de fixation (36),
**caractérisé en ce que**
- le dispositif de châssis (10) comprend le composant (30) fourni en plus du mécanisme de direction (32), composant qui est fixé à l'élément porteur (24) au moyen de l'élément de liaison (28), dans lequel
- le composant (30) est formé comme un élément structurel d'une climatisation pour le véhicule ou comme un dispositif de stockage d'énergie configuré pour le stockage d'énergie électrique ou comme un moteur d'entraînement au moyen duquel le véhicule peut être entraîné.
